# EUROPÄISCHE PATENTSCHRIFT

(11) **EP 2 218 568 B1**
(45) Veröffentlichungstag und Bekanntmachung des Hinweises auf die Patenterteilung: **18.01.2012**
(21) Anmeldenummer: 09001867.2
(22) Anmeldetag: 11.02.2009
(51) Int. Cl.: B29C 47/58, B29C 47/76, B01D 39/10, B01D 39/20

(54) **Schnecken-Maschine**
Worm machine
Machine à vis sans fin

(43) Veröffentlichungstag der Anmeldung: 18.08.2010
(73) Patentinhaber: Coperion GmbH, 70469 Stuttgart (DE)
(72) Erfinder: Stirner, Thorsten, 75203 Königsbach-Stein (DE)
(74) Vertreter: Rau, Manfred

(56) Entgegenhaltungen:
- EP-A- 1 400 337
- EP-A- 1 977 877
- US-A- 4 578 455

## Beschreibung

Eine derartige als Extruder ausgebildete Schnecken-Maschine ist aus der DE 1 729 395 B (entsprechend GB 1 277 150) bekannt. Dort ist ein normales Sieb oder ein Filter aus Sinter-Material als Vakuum-Gehäuse-Abschnitt vorgesehen, um eine Entlüftung des in großem Umfang Luft enthaltenden aufzubereitenden Schüttguts herbeizuführen. Der poröse Wand-Abschnitt kann eben ausgebildet sein und in deutlichem Abstand von den Bohrungen im Gehäuse angeordnet sein. Alternativ kann dieser poröse Wand-Abschnitt in der Flucht der Bohrungs-Wandungen angeordnet sein. Es hat sich gezeigt, dass in letzterem Fall die der Bohrung zugewandte Wand des porösen Wand-Abschnitts durch anplastifizierten Kunststoff zugesetzt wurde und damit der erwünschte Effekt der Entlüftung zunichte gemacht wurde. In ersterem Fall ist die Entlüftung weitgehend unterbunden worden.

Ein weiterer Extruder ist aus der DE 195 16 082 A1 bekannt. Dort wird von dem Grundproblem ausgegangen, dass die Eingabe von pulverförmigem Schüttgut in einen Extruder schwierig ist. Um auf den Einsatz von vorverdichtenden Beschickungseinrichtungen, z. B. Stopfschnecken, verzichten zu können, sind in der Einzugs-Zone bzw. Feststoff-Förder-Zone Öffnungen derart großen Durchmessers ausgebildet, dass aus ihnen durch anliegenden Unterdruck im Bereich von 0 bis 50% Gas und Feststoff austreten kann und soll. Der einzige Zweck dieser Unterdruck-Beaufschlagung ist die Entgasung des Schüttguts. Dadurch soll weiterhin vermieden werden, dass eine Rückwärtsentgasung über die Zuführ-Öffnung erfolgt, die ebenfalls die Schüttgut-Zufuhr behindert. Weiterhin kann in der Einzugs-Zone bereits ein Druck aufgebaut werden. Ein weiterer Vorteil soll darin liegen, dass im Bereich der dem Gas- und Materialaustritt dienenden Öffnungen eine Erhöhung des Reibbeiwertes am Gehäuse stattfindet. Von Nachteil ist, dass neben Gas auch ein Teil des pulverförmigen Feststoffs durch die Öffnungen abgezogen wird. Damit ist eine ausreichende Betriebssicherheit und Wirtschaftlichkeit nicht gewährleistet. Eine ähnlich aufgebaute Zuführ-Schnecken-Maschine ist aus der DE 20 2007 011 767 U1 bekannt.

Aus der Veröffentlichung der "The Japan Steel Works, Ltd., Plastics Processing Technology News Letter", De - Gassing-Zylinder "DGC" - ist ein Extruder der gattungsgemäß vorausgesetzten Art bekannt, bei dem als gasdurchlässiger Wand-Abschnitt ein Filter eingesetzt wird, durch den Luft, aber auch große Mengen von Prozessgasen, wie z.B. Wasserdampf bei ABS und Holzmehl, abgezogen werden sollen. Auch hier wird ein Teil des Feststoffs durch die Filteröffnungen abgezogen. Im übrigen besteht auch die Gefahr des Verstopfens der Filteröffnungen durch das pulverförmige Schüttgut.

Aus der EP 1 977 877 A1 (entspr. US 2008/0248152A ist ein weiterer der gattungsgemäßen Schnecken-Maschine gleicher Extruder bekannt, bei dem der gasdurchlässige aus Sinter-Metall bestehende Wand-Abschnitt eine die mindestens eine Bohrung begrenzende Innenwand aufweist, die gegenüber der Innen-Wand der Bohrung unter Bildung eines Spalts mit einem Teil-Kreisring-Querschnitt zurückversetzt ist, wobei zusätzlich der gasdurchlässige Wand-Abschnitt mittels einer Druck-Spül-Leitung an eine Druckgas-Quelle anschließbar ist. Es hat sich gezeigt, dass die Gasdurchlässigkeit auch hierbei durch eindringende Schüttgut-Partikel abnimmt. Im Extremfall wird der gasdurchlässige Wand-Abschnitt durch eine Verstopfung der Poren oder Mikro-Kanäle unbrauchbar, wobei dieser Effekt auch nicht durch eine Rückspülung beseitigbar ist. Ein Austausch oder eine Reparatur eines solchen aus Sinter-Metall bestehenden, an sich gasdurchlässigen Wand-Abschnitts ist arbeits- und kostenaufwändig. Einer der Gründe für die Verstopfung liegt darin, dass die Filterfeinheit derartiger Sinter-Metalle nicht klein genug ist, so dass Schüttgut-Partikel in das Sinter-Metall eindringen und es verstopfen.

Aus der EP 1 400 337 A1 ist es bekannt, bei einer Vorrichtung zum Extrudieren von Thermoplasten Entgasungsöffnungen vorzusehen, die mit einer Metalldrahtgewebe-Verbundplatte gegen den Austritt von Feststoffpartikeln geschützt sind. Diese Verbundplatte ist klappbar oder mittels eines Bajonettverschlusses an der jeweiligen Öffnung angebracht.

Aus der US 4,578,455 A (entsprechend DE 33 10 676 A1) ist es bekannt, an einem Extruder flüchtige Anteile aus Polymerschmelzen oder Paste durch eine Vielzahl von Porenöffnungen abzuführen. Geeignet hierfür sind poröse Platten, wie Sinterplatten, z.B. aus Metall, Keramik oder hochschmelzenden Polymeren, ferner Platten aus Metallfasern. Besonders bevorzugt werden Sinterplatten aus Metall oder Metallfaserplatten verwendet.

Der Erfindung liegt die Aufgabe zugrunde, die Gefahr einer Verstopfung des gasdurchlässigen Wand-Abschnitts zu verringern und im Falle einer Verstopfung die Möglichkeit zu deren Beseitigung zu verbessern.

Diese Aufgabe wird erfindungsgemäß durch die Merkmale im Kennzeichnungsteil des Anspruches 1 gelöst.

Durch den Einsatz eines Metall-Vlieses kann eine deutlich höhere Filterfeinheit erreicht werden als beim Einsatz von Sinter-Metallen. Weiterhin ist durch die erfindungsgemäßen Maßnahmen der Austausch eines solchen sehr dünnen Metall-Vlieses mit relativ wenigen Handgriffen möglich. Weil die Filterfeinheit eines solchen Metall-Vlieses sehr gering sein kann, dringen Schüttgut-Partikel nicht in dieses ein, jedenfalls in deutlich geringerem Umfang als bei Sinter-Metall. Da derartige Metall-Vliese sehr dünn ausgebildet sein können, ist der in ihnen auftretende Druckverlust sehr gering. Der Begriff der Filterfeinheit und die zugehörigen Zahlenwerte werden entsprechend ISO16889 verwendet.

Da das Metall-Vlies selbst nicht tragfähig ist, sind die Maßnahmen nach den Ansprüchen 2 bis 7 alternativ oder kumulativ von großem Vorteil. Die Ansprüche 8 bis 13 geben wiederum alternativ oder kumulativ eine vorteilhafte Ausgestaltung des erfindungsgemäßen Vakuum-Gehäuse-Einsatzes wieder, die ein einfaches Auswechseln des Metall-Vlieses ermöglicht.

Die erfindungsgemäße Schnecken-Maschine kann einerseits als Extruder zur Aufbereitung von zumindest teilweise pulverförmigem, also Luft enthaltendem Schüttgut, oder aber auch als Zuführ-Schnecken-Maschine ausgebildet sein, in der das Schüttgut entlüftet und verdichtet wird und dann dem Extruder zur Aufbereitung zugeführt wird.

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Extruder-Anlage mit einem Extruder im vertikalen Längsschnitt,
- Fig. 2: den Extruder nach Fig. 1 im horizontalen Längsschnitt,
- Fig. 3: einen Vakuum-Gehäuse-Einsatz nach der Erfindung im Quer- schnitt,
- Fig. 4: eine Teil-Darstellung aus Fig. 3 in vergrößertem Maßstab,
- Fig. 5: eine perspektivische Darstellung eines Vakuum-Gehäuse- Einsatzes,
- Fig. 6: einen Vakuum-Gehäuse-Einsatz in Explosionsdarstellung,
- Fig. 7: eine abgewandelte Ausführungsform eines Vakuum- Gehäuse-Einsatzes in Explosionsdarstellung und
- Fig. 8: eine Extruder-Anlage mit einer vorgeordneten Fütter- Schnecken-Maschine im vertikalen Längsschnitt.

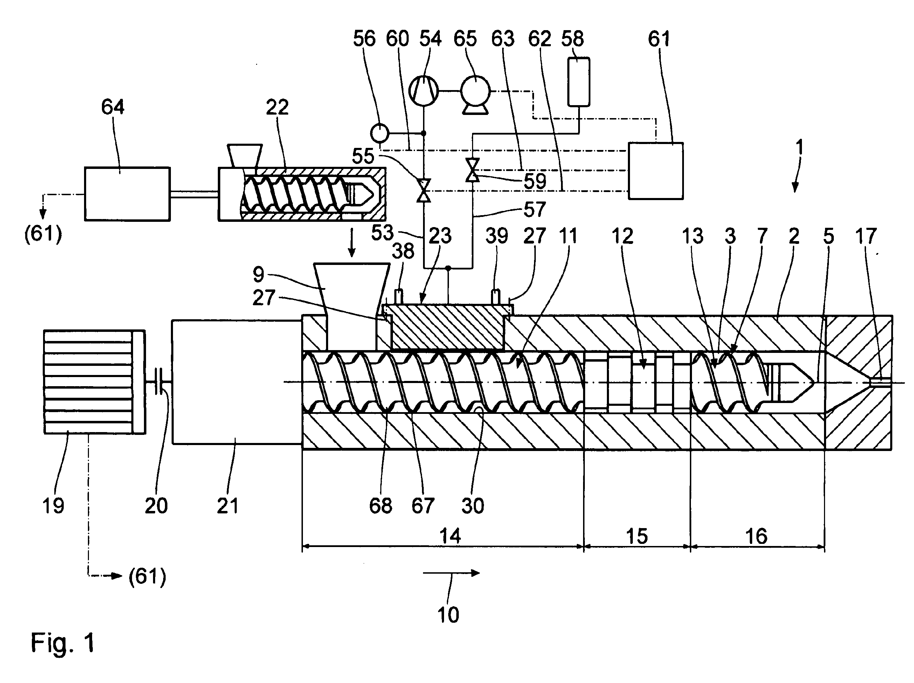

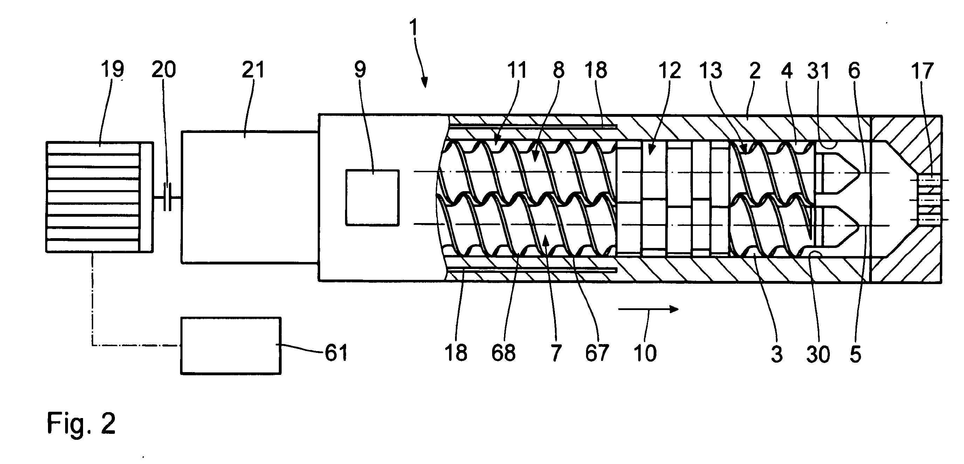

Die in Fig. 1 und 2 dargestellte Extruder-Anlage weist eine als Extruder 1 ausgebildete Schnecken-Maschine auf. In dessen in der üblicherweise aus mehreren Gehäuseschüssen bestehendem Gehäuse 2 sind achtförmig ineinandergreifende Gehäuse-Bohrungen 3, 4 ausgebildet, deren Achsen 5, 6 parallel zueinander verlaufen. In den Gehäuse-Bohrungen 3, 4 sind zwei Schnecken 7, 8 angeordnet. Die Schnecken sind als gleichsinnig drehende dicht kämmende Schnecken 7, 8 ausgebildet. An einem - in Fig. 1 und 2 linken - Ende mündet ein Zuführ-Trichter 9 in die Bohrungen 3, 4 ein. Ausgehend von dem Zuführ-Trichter 9 sind in Förderrichtung 10 die Schnecken 7, 8 mit einem ersten Förder-Schnecken-Abschnitt 11, daran anschließend einem Knet-Scheiben-Abschnitt 12 und wieder einem zweiten Förder-Schnecken-Abschnitt 13 versehen.

Der erste Förder-Schnecken-Abschnitt 11 erstreckt sich über eine als Feststoff-Förderzone wirkende Einzugs-Zone 14. Der Knet-Scheiben-Abschnitt 12 definiert hier eine Aufschmelz-Zone 15. Der zweite Förder-Schnecken-Abschnitt 13 definiert eine Druckaufbau-Zone 16. An die Druckaufbau-Zone 16 schließt am Ende des Gehäuses 2 eine Austritts-Düse 17 an. Wie weiterhin der Zeichnung entnehmbar ist, ist das Gehäuse 2 in einem begrenzten Abschnitt der Einzugs-Zone 14 mit Kühlkanälen 18 versehen. Der Antrieb der Schnecken 7, 8 erfolgt mittels eines Elektro-Motors 19, der über eine Kupplung 20 mit einem Untersetzungs- und Verteiler-Getriebe 21 antriebsmäßig verbunden ist. An das Getriebe 21 sind wiederum die Schnecken 7, 8 in üblicher Weise angekoppelt. Oberhalb des Zuführ-Trichters 9 ist eine Dosier-Einrichtung 22 angeordnet, die beispielsweise als gravimetrische Dosier-Schnecke ausgebildet ist.

Mit geringem Abstand, aber im Abstand hinter dem Zuführ-Trichter 9 weist das Gehäuse 2 einen Vakuum-Gehäuse-Einsatz 23 auf, der sich also über einen Teilabschnitt der Einzugs-Zone 14 erstreckt und der in eine angepasste Öffnung 2a im Gehäuse 2 ausgebildet ist. Der Vakuum-Gehäuse-Einsatz 23 weist einen blockförmigen Grundkörper 24 auf, der auf einer Seite mit einem umlaufenden Flansch 25 versehen ist, in dem Bohrungen 26 zur Befestigung mittels Schrauben 27 am Gehäuse 2 ausgebildet sind. An seiner dem Flansch 25 abgewandten Seite ist der Grundkörper 24 mit zwei etwa teilzylindrischen Auflageflächen 28, 29 versehen, die im Wesentlichen der Krümmung der Innenwände 30, 31 der Bohrungen 3, 4 entsprechen und an ihrer Durchdringungsstelle einen Zwickel 32 bilden.

Im blockförmigen Grundkörper 24 ist ein zentraler Vakuum-Kanal 33 ausgebildet, der mittels je eines Verzweigungs-Kanals 34, 35 in jeder Auflage-Fläche 28, 29 mündet. In den Auflage-Flächen 28, 29 können noch in Form offener Nuten ausgebildete Vakuum-Verteilungs-Kanäle 36 ausgebildet sein.

Außerdem sind benachbart zu den Auflage-Flächen 28, 29 im Grundkörper 24 noch Kühl-Kanäle 37 ausgebildet, die über einen Kühlmittel-Zuführ-Anschluss 38 im Flansch 25 mit Kühlmittel versorgt werden, das über einen Kühlmittel-Abführ-Anschluss 39 im Flansch 25 wieder abgeführt wird. Die Auflage-Flächen 28, 29 sind durch parallel zu den Achsen 5, 6 der Bohrungen 3, 4 verlaufende geradlinige Rand-Stege 40 und durch der Krümmung der Auflage-Flächen 28, 29 folgende gekrümmte Rand-Stege 41 begrenzt, wobei die Rand-Stege 40, 41 um ein geringes Maß gegenüber den Auflage-Flächen 28, 29 hochragen.

Zwischen die Rand-Stege 40, 41 ist auf die Auflage-Flächen 28, 29 ein entsprechend dem doppelt gekrümmten Verlauf der Auflage-Flächen 28, 29 gekrümmtes Drainage-Gewebe 42 mit grober Maschenweite, beispielsweise einer Maschenweite von 800 µm und einer Dicke von beispielsweise 1,0 mm aufweist, aufgelegt. Allgemein gilt, dass das Drainage-Gewebe 42 eine Maschenweite im Bereich von 500 µm bis 1000 µm hat. Auf diesem Drainage-Gewebe 42 liegt ein Stütz-Gewebe 43 mit einer feineren Maschenweite von beispielsweise etwa 300 µm. Allgemein gilt, dass das Stütz-Gewebe 43 eine Maschenweite im Bereich von 100 µm bis 400 µm aufweist. Die Dicke ist beispielsweise im Bereich von 0,4 mm. Auf diesem Stützgewebe 43 ist schließlich ein dünnes Metall-Vlies 44 angeordnet, das eine sehr hohe Porösität bei Filterfeinheiten gemäß ISO16889 von 3 µm bis 10 µm aufweist. Allgemein gilt, dass die Filterfeinheit des Metall-Vlieses 44 von 1 µm bis 10 µm geht. Die Dicke des Metall-Vlieses 44 liegt hierbei im Bereich von 0,3 mm bis 0,5 mm. Unter einem Vlies versteht man eine Schicht aus aneinander haftenden im Wesentlichen geraden, ungeordneten Fasern, die also nicht durch Weben oder Wirken miteinander verbunden sind.

Während das Drainage-Gewebe 42 und das Stütz-Gewebe 43 auf den Auflage-Flächen 28, 29 zwischen den Rand-Stegen 40, 41 liegen, liegt das Metall-Vlies 44 auf diesen Rand-Stegen 40, 41 auf.

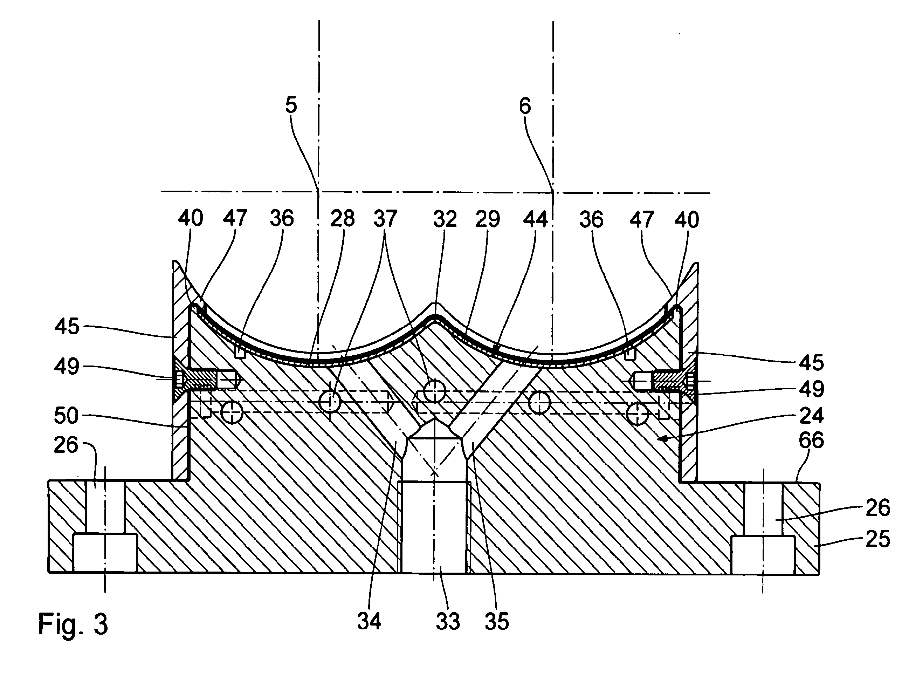

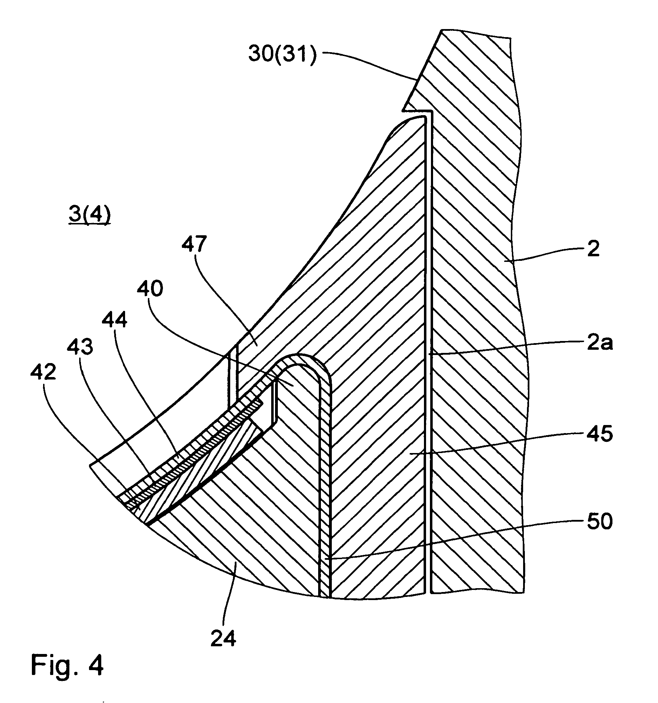

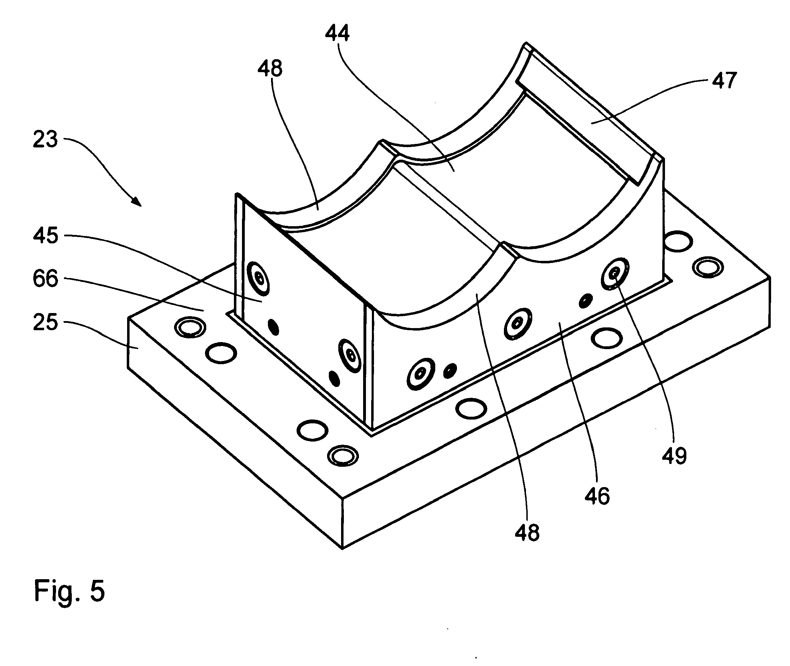

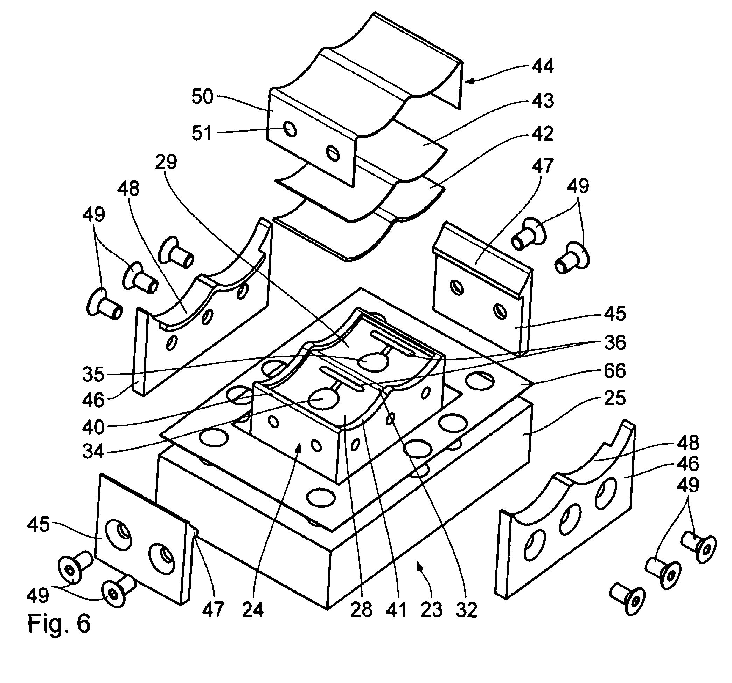

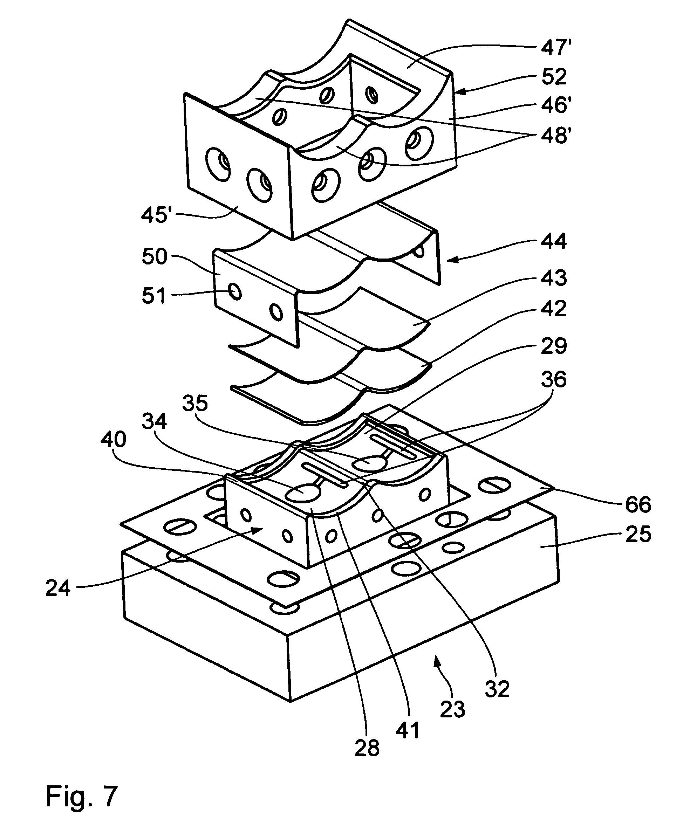

Die Befestigung des Drainage-Gewebes 42, des Stütz-Gewebes 43 und des Metall-Vlieses 44 erfolgt durch Leisten 45, 46. Die Leisten 45, 46 sind etwa L-förmig ausgebildet, d. h. sie weisen einen quer vorspringenden Klemm-Steg 47 bzw. 48 auf. Die Leisten 45 weisen einen geradlinigen Klemm-Steg 47 auf, der den Rand-Stegen 40 zugeordnet ist. Die Leisten 46 weisen doppelt gekrümmte Klemm-Stege 48 auf, die den gekrümmten Rand-Stegen 41 entsprechen. Wie den Fig. 3 bis 5 und den Explosionsdarstellungen gemäß Fig. 6 und 7 entnehmbar ist, wird das Metall-Vlies 44 mittels der Leisten 45, 46 rundum auf den Rand-Stegen 40, 41 mittels der Klemm-Stege 47, 48 fest eingespannt. Die Leisten 45, 46 werden mittels Schrauben 49 am Grundkörper 24 befestigt. Das Metall-Vlies 44 wird hierbei rundum fest zwischen den Rand-Stegen 40, 41 und den Klemm-Stegen 47, 48 unter Zusammenpressung eingespannt. Zweckmäßigerweise weist das Metall-Vlies 44 noch zusätzliche Klemm-Abschnitte 50 auf, die über die geradlinigen Rand-Stege 40 nach unten gebogen sind und zwischen den Leisten 45 und dem Grundkörper 24 geklemmt werden, wobei die zugeordneten Schrauben 49 auch noch Löcher 51 in diesen Klemm-Abschnitten 50 durchsetzen, wie den Explosionsdarstellungen nach Fig. 6 und 7 entnehmbar ist.

Alternativ können die Halte-Leisten 45', 46' auch zu einem Halte-Rahmen 52 verbunden sein, wobei sie entweder von vornherein insgesamt einstückig ausgebildet werden, oder durch Verschweißen oder dergleichen miteinander verbunden werden. Dies ist der Explosionsdarstellung nach Fig. 7 zu entnehmen.

Der Vakuum-Kanal 33 ist über eine Vakuum-Leitung 53 an eine Vakuum-Quelle 54, beispielsweise eine Wasserring-Pumpe, angeschlossen. In der Vakuum-Leitung 53 ist ein Vakuum-Steuer-Ventil 55 vorgesehen. Des Weiteren ist zwischen der Vakuum-Quelle 54 und dem Ventil 55 ein Druck-Mess-Gerät 56 vorgesehen. In den Vakuum-Kanal 33 mündet weiterhin eine Druck-Spül-Leitung 57 ein, die an eine Druckgas-Quelle 58 angeschlossen ist. In diese Druck-Spül-Leitung 57 ist ein Spül-Ventil 59 eingebaut. Das Druck-Mess-Gerät 56 gibt über eine Signal-Leitung 60 Mess-Signale, die dem jeweils in der Vakuum-Leitung 53 gemessenen Druck entsprechen, auf eine zentrale Steuerung 61. Von der zentralen Steuerung 61 wird wiederum das Vakuum-Steuer-Ventil 55 über eine Vakuum-Steuer-Leitung 62 angesteuert. Des Weiteren wird von der Steuerung 61 über eine Leitung 63 das Spül-Ventil 59 angesteuert. Schließlich werden von der Steuerung 61 auch der Antriebs-Motor 64 der Dosier-Einrichtung 22, der Antriebs-Motor 19 des Extruders 1 und der Motor 65 der Vakuum-Quelle 54 angesteuert. Wenn der Druck in der Vakuum-Leitung 53 einen vorgegebenen Wert unterschreitet, dann ist dies ein Anzeichen dafür, dass das Metall-Vlies 44 einen vorgegebenen zulässigen Verstopfungswert überschritten hat. Dann werden das Vakuum-Steuer-Ventil 55 geschlossen und die Motoren 19, 64, 65 abgeschaltet. Gleichzeitig wird das Spül-Ventil 59 geöffnet, so dass ein Druckgasstoß von der Druckgas-Quelle 58 durch den Vakuum-Kanal 33 gegeben wird, der zu einer entsprechenden Reinigung des Metall-Vlieses 44 führt.

Wenn dagegen mit einer einfachen Rückspülung das Metall-Vlies 44 nicht mehr ausreichend gereinigt werden kann, dann kann es in sehr einfacher Weise ausgewechselt werden, und zwar durch Lösen der Schrauben 27 und Herausziehen des Vakuum-Gehäuse-Einsatzes 23 aus dem Gehäuse 2. Anschließend werden die Schrauben 49 gelöst, so dass die Halte-Leisten 45, 46 bzw. die zu einem Halte-Rahmen 52 verbundenen Halte-Leisten 45', 46' abgenommen werden können. Das Metall-Vlies 44 wird ausgetauscht. Der Einsatz 23 wird wieder zusammengesetzt und in das Gehäuse 2 des Extruders 1 eingefügt. Zwischen dem Flansch 25 des Vakuum-Gehäuse-Einsatzes 23 und dem Gehäuse 2 kann eine Dichtung 66 angeordnet sein. Wie aus der Zeichnung ersichtlich ist, liegen die Klemm-Stege 47, 48 bündig mit der jeweiligen Innenwand 30 bzw. 31 der Bohrungen 3, 4. Dies bedeutet, dass das Metall-Vlies 44 einen Spalt 67 gegenüber den Schnecken-Stegen 68 der Schnecken 7, 8 begrenzt.

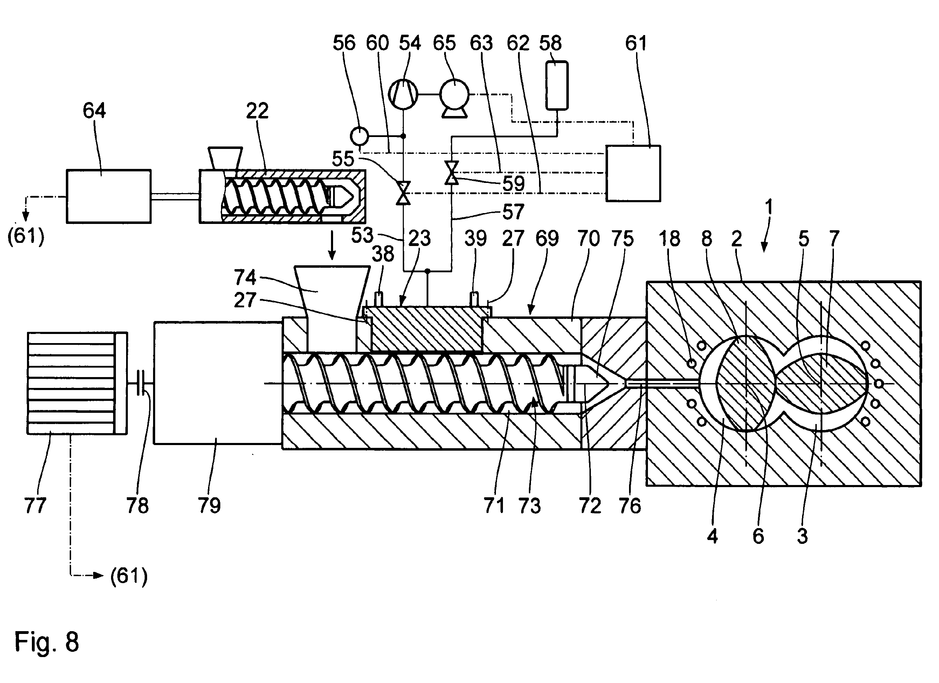

Bei der Ausgestaltung einer Extruder-Anlage nach Fig. 8 werden die aufzubereitenden Schüttgüter dem Extruder 1 nicht mittels der Dosier-Einrichtung 22 über einen Zuführ-Trichter zugeführt, sondern mittels einer Zuführ-Schnecken-Maschine 69. Diese weist ein Gehäuse 70 auf, in dem ein oder zwei Bohrungen 71 ausgebildet sind, die jeweils Achsen 72 aufweisen. In jeder Gehäuse-Bohrung 71 ist eine Schnecke 73 angeordnet. An einem - in Fig. 8 linken - Ende mündet ein Zufuhr-Trichter 74 in die mindestens eine Bohrung 71 ein. Die Schnecke 73 ist als reine Förderschnecke ausgebildet, wobei bei Vorhandensein von zwei Schnecken 73 diese als gleichsinnig drehende, dicht kämmende Förderschnecken ausgebildet sind. Im Bereich der Schnecken-Spitze 75 ist ein Gehäuse-Auslass 76 ausgebildet, der in den nachgeordneten Extruder 1 einmündet, in den das im Extruder 1 aufzubereitende Material, insbesondere also pulverförmiges Material, wie Polymer oder Zuschlagsstoffe, eingegeben werden.

Der Antrieb der mindestens einen Schnecke 73 erfolgt mittels eines Elektro-Motors 77, der in der üblichen Weise über eine Kupplung 78 mit einem Untersetzungs-Getriebe 79 antriebsmäßig verbunden ist. An das Getriebe 79 ist wiederum die Schnecke 73 in üblicher Weise angekoppelt, wobei das Getriebe 79 im Fall von zwei Schnecken 73 auch als Verteiler-Getriebe ausgebildet ist. Die Dosier-Einrichtung 22 ist oberhalb des Zuführ-Trichters 74 angeordnet und ist so aufgebaut und arbeitet so, wie es bereits geschildert worden ist.

Unmittelbar hinter dem Zuführ-Trichter 74 ist im Gehäuse 70 ein oben bereits im Einzelnen geschilderter Vakuum-Gehäuse-Einsatz 23 angeordnet, dessen Versorgung mit Teil-Vakuum und Spülluft in der gleichen Weise erfolgt, wie es bereits für die Extruder-Anlage oben geschildert worden ist.

Das stark lufthaltige Schüttgut wird in der Zuführ-Schnecken-Maschine 69 über den Vakuum-Gehäuse-Einsatz 23 entlüftet und verdichtet, so dass es dem Extruder 1 bereits in verdichteter Form zugeführt wird. In letzterem braucht in diesem Fall im Extruder 1 keine Entlüftung mehr zu erfolgen.

Um einer mechanischen Beschädigung des Metall-Vlieses 44, z. B. durch Granulate oder durch Reibung, entgegenzuwirken, kann das Metall-Vlies 44 mittels eines Siebgewebes verstärkt werden. Das Metall-Gewebe ist auf der der jeweiligen Bohrung 3, 4 abgewandten Seite des Metall-Vlieses 44 angebracht.

## Patentansprüche

1. Schnecken-Maschine zur Behandlung von zumindest teilweise pulverförmigem Schüttgut,
- mit einem Gehäuse (2; 70),
-- das mindestens eine Gehäuse-Bohrung (3, 4; 71) mit einer Innen-Wand (42, 43) aufweist,
- mit einer an einem Ende des Gehäuses (2; 70) angeordneten Zuführ-Öffnung (9; 74) für das Schüttgut,
- mit jeweils einer in der mindestens einen Gehäuse-Bohrung (3, 4; 71) angeordneten Schnecke (7, 8; 73),
- mit einer der Zufuhr-Öffnung (9; 74) vorgeordneten Dosier-Einrichtung (22) zur Zuführung des Schüttguts,
- mit einem Vakuum-Gehäuse-Abschnitt in der Einzugs-Zone (14), der einen gasdurchlässigen, die mindestens eine Gehäuse-Bohrung (3, 4; 71) begrenzenden Wand-Abschnitt (24) aufweist, und
- mit einem Antrieb (19; 77) für die mindestens eine Schnecke (7, 8; 74),
**dadurch gekennzeichnet,**
- **dass** der Vakuum-Gehäuse-Abschnitt als lösbar im Gehäuse (2; 70) angebrachter Vakuum-Gehäuse-Einsatz (23) ausgebildet ist, in dem ein eine Filterfeinheit von 1 µm bis 10 µm auf- weisendes Metall-Vlies (44) als gasdurchlässiger Wand-Abschnitt an einem Grundkörper (24) auswechselbar gehalten ist.

2. Schnecken-Maschine nach Anspruch 1, **dadurch gekennzeichnet,**
**dass** das Metall-Vlies (44) über einen gasdurchlässigen Stütz-Körper gegenüber dem Grundkörper (24) abgestützt ist.

3. Schnecken-Maschine nach Anspruch 2, **dadurch gekennzeichnet, dass** der Stütz-Körper als Stütz-Gewebe (43) ausgebildet ist.

4. Schnecken-Maschine nach einem der Ansprüche 2 bis 3, **dadurch gekennzeichnet, dass** zwischen dem Stütz-Körper und dem Grundkörper (24) ein gasdurchlässiger Drainage-Körper angeordnet ist.

5. Schnecken-Maschine nach Anspruch 4, **dadurch gekennzeichnet, dass** der Drainage-Körper als Drainage-Gewebe (42) ausgebildet ist. 3

6. Schnecken-Maschine nach Anspruch 3, **dadurch gekennzeichnet, dass** das Stütz-Gewebe (43) eine Maschenweite im Bereich von 100 µm bis 400 µm aufweist.

7. Schnecken-Maschine nach Anspruch 5, **dadurch gekennzeichnet, dass** das Drainage-Gewebe (42) eine Maschenweite im Bereich von 500 µm bis 1000 µm aufweist.

8. Schnecken-Maschine nach einem der Ansprüche 1 bis 7, **dadurch gekennzeichnet, dass** der Grundkörper (24) mindestens eine der Innen-Wand (30, 31) der mindestens einen Bohrung (3, 4) angepasste teilzylindrische Auflage-Fläche (28, 29) aufweist, gegen die das Metall-Vlies (44) abgestützt ist und
dass am Grundkörper (24) Halte-Leisten (45, 46, 45', 46') lösbar angebracht sind, die das Metall-Vlies (44) klemmend am Grundkörper (24) halten.

9. Schnecken-Maschine nach Anspruch 8, **dadurch gekennzeichnet, dass** die Halte-Leisten (45, 46, 45', 46') Klemm-Stege (47, 48) aufweisen, die das Metall-Vlies (44) klemmend gegen den Grundkörper (24) halten.

10. Schnecken-Maschine nach einem der Ansprüche 2 bis 9, **dadurch gekennzeichnet,**
**dass** der Grundkörper (24) mit die mindestens eine Auflage-Fläche (28, 29) umgebenden Rand-Stegen (40, 41) versehen ist, zwischen denen der Stütz-Körper und/oder der Drainage-Körper angeordnet sind.

11. Schnecken-Maschine nach einem der Ansprüche 8 bis 10, **dadurch gekennzeichnet,**
**dass** die Halte-Leisten (45, 46, 45', 46') bündig mit der Innen-Wand (30, 31) der mindestens einen Bohrung (3, 4) angeordnet sind.

12. Schnecken-Maschine nach einem der Ansprüche 8, bis 11, **dadurch gekennzeichnet,**
**dass** das Metall-Vlies (44) teilweise zwischen dem Grundkörper (24) und mindestens einer Halte-Leiste (45, 45') klemmend gehalten ist.

13. Schnecken-Maschine nach einem der Ansprüche 8 bis 12, **dadurch gekennzeichnet,**
**dass** die Halte-Leisten (45', 46') als Halte-Rahmen (52) ausgebildet sind.

14. Schnecken-Maschine nach einem der Ansprüche 1 bis 13, **dadurch gekennzeichnet,**
**dass** das Metall-Vlies (44) mit einem Metall-Gewebe als Verstärkung versehen ist.

## Claims

1. Screw machine for treating at least partially powdery bulk material,
- with a housing (2; 70),
-- which has at least one housing bore (3, 4; 71) with an inner wall (42, 43),
- with a feed opening (9; 74) for the bulk material arranged at one end of the housing (2; 70),
- with a respective screw (7, 8; 73) arranged in the at least one housing bore (3, 4; 71),
- with a metering device (22) arranged upstream of the feed opening (9; 74) for feeding the bulk material
- with a vacuum housing portion in the intake zone (14), which has a gas-permeable wall portion (24) delimiting the at least one housing bore (3, 4; 71), and
- with a drive (19; 77) for the at least one screw (7, 8; 74),
**characterized**
- **in that** the vacuum housing portion is formed as a vacuum housing insert (23) releasably attached in the housing (2; 70), in which a metal nonwoven (44) having a filter fineness of 1 µm to 10 µm is exchangeably held as a gas-permeable wall portion on a base body (24).

2. Screw machine according to claim 1, **characterized in that** the metal nonwoven (44) is supported by means of a gas-permeable support body with respect to the base body (24).

3. Screw machine according to claim 2, **characterized in that** the support body is formed as a support woven fabric (43).

4. Screw machine according to any one of claims 1 to 4, **characterized in that** a gas-permeable drainage body is arranged between the support body and the base body (24).

5. Screw machine according to claim 4, **characterized in that** the drainage body is formed as a drainage woven fabric (42).

6. Screw machine according to claim 3, **characterized in that** the support woven fabric (43) has a mesh width in the range of 100 µm to 400 µm.

7. Screw machine according to claim 5, **characterized in that** the drainage woven fabric (42) has a mesh width in the range of 500 µm to 1000 µm.

8. Screw machine according to any one of claims 1 to 7, **characterized in that** the base body (24) has at least one partially cylindrical support face (28, 29) adapted to the inner wall (30, 31) of the at least one bore (3, 4), against which support face the metal nonwoven (44) is supported and **in that** holding strips (45, 46, 45', 46') are releasably attached to the base body (24) and hold the metal nonwoven (44) in a clamping manner on the base body (24).

9. Screw machine according to claim 8, **characterized in that** the holding strips (45, 46, 45', 46') have clamping webs (47, 48), which hold the metal nonwoven (44) in a clamping manner against the base body (24).

10. Screw machine according to any one of claims 1 to 9, **characterized in that** the base body (24) is provided with edge webs (40, 41) surrounding the at least one support face (28, 29), between which edge webs the support body and/or the drainage body are arranged.

11. Screw machine according to any one of claims 1 to 10, **characterized in that** the holding strips (45, 46, 45', 46') are arranged flush with the inner wall (30, 31) of the at least one bore (3, 4).

12. Screw machine according to any one of claims 1 to 11, **characterized in that** the metal nonwoven (44) is partially held in a clamping manner between the base body (24) and at least one holding strip (45, 45').

13. Screw machine according to any one of claims 1 to 12, **characterized in that** the holding strips (45', 46') are formed as a holding frame (52).

14. Screw machine according to any one of claims 1 to 13, **characterized in that** the metal nonwoven (44) is provided with a metal woven fabric as a reinforcement.

## Revendications

1. Machine à vis sans fin pour le traitement d'un produit en vrac au moins partiellement pulvérulent,
- comprenant un corps (2 ; 70),
-- qui présente au moins un alésage de corps (3, 4 ; 71) avec une paroi interne (42, 43),
- comprenant un orifice d'admission (9 ; 74) pour le produit en vrac à l'une des extrémités du corps (2 ; 70),
- comprenant une vis sans fin (7, 8 ; 73) disposée, suivant le cas, au niveau d'au moins un alésage de corps (3, 4 ; 71),
- comprenant une installation de dosage (22) disposée préalablement à l'orifice d'admission (9 ; 74) pour l'alimentation du produit en vrac,
- comprenant une partie de corps sous vide dans la zone d'alimentation (14), qui présente une portion de paroi (24), perméable aux gaz, attenante à au moins un alésage de corps (3, 4 ; 71), et
- comprenant un entraînement (19 ; 77) pour au moins une vis sans fin (7, 8 ; 74),
**caractérisée en ce**
- **que** la partie de corps sous vide, pouvant être détachée dans le corps (2 ; 70), est sous la forme d'une partie de corps sous vide (23) rapportée, dans laquelle une toile métallique (44) présentant une unité de filtration entre 1 µm et 10 µm est maintenue sur le corps de base (24) jouant le rôle de portion de paroi perméable aux gaz.

2. Machine à vis sans fin selon la revendication 1 **caractérisée en ce**
**que** la toile métallique (44) est appuyée sur un corps support perméable aux gaz en face du corps de base (24).

3. Machine à vis sans fin selon la revendication 2 **caractérisée en ce que** le corps support est conçu sous la forme d'une trame de support (43).

4. Machine à vis sans fin selon l'une des revendications 2 ou 3 **caractérisée en ce qu'**un corps de drainage perméable aux gaz est disposé entre le corps support et le corps de base (24).

5. Machine à vis sans fin selon la revendication 4 **caractérisée en ce que** le corps de drainage est conçu sous la forme d'une trame de drainage (42).

6. Machine à vis sans fin selon la revendication 3 **caractérisée en ce que** la trame de support (43) présente une taille de maille dans un domaine entre 100 µm et 400 µm.

7. Machine à vis sans fin selon la revendication 5 **caractérisée en ce que** la trame de drainage (42) présente une taille de maille dans un domaine entre 500 µm et 1000 µm.

8. Machine à vis sans fin selon l'une des revendications de 1 à 7 **caractérisée en ce que** le corps de base (24) présente au moins une surface d'appui (28, 29) partiellement cylindrique ajustée à au moins un alésage (3, 4) dans au moins l'une des parois internes (30, 31), surface qui est appuyée contre la toile métallique (44) et
que des barrettes de maintien (45, 46, 45', 46'), pouvant être détachées, sont rapportées sur le corps de base (24), barrettes qui maintiennent la toile métallique (44) en la bloquant sur le corps de base (24).

9. Machine à vis sans fin selon la revendication 8 **caractérisée en ce**
**que** les barrettes de maintien (45, 46, 45', 46') présentent des espaces de blocage (47, 48) qui maintiennent la toile métallique (44) en la bloquant contre le corps de base (24).

10. Machine à vis sans fin selon l'une des revendications de 2 à 9 **caractérisée en ce**
**que** le corps de base (24) est muni d'espaces de bordure (40, 41) entourant au moins la surface d'appui (28, 29), entre lesquels sont disposés le corps support et/ou le corps de drainage.

11. Machine à vis sans fin selon l'une des revendications de 8 à 10 **caractérisée en ce**
**que** les barrettes de maintien (45, 46, 45', 46') sont disposées faisant corps avec la paroi interne (30, 31) d'au moins un alésage (3, 4).

12. Machine à vis sans fin selon l'une des revendications de 8 à 11 **caractérisée en ce**
**que** la toile métallique (44) est maintenue bloquée partiellement entre le corps de base (24) et au moins l'une des barrettes de maintien (45, 45').

13. Machine à vis sans fin selon l'une des revendications de 8 à 12 **caractérisée en ce**
**que** les barrettes de maintien (45', 46') sont conçues sous la forme d'un cadre de maintien (52).

14. Machine à vis sans fin selon l'une des revendications de 1 à 13 **caractérisée en ce**
**que** la toile métallique (44) est munie d'une trame métallique en tant que renfort.
